# EUROPEAN PATENT SPECIFICATION

(11) **EP 1 415 292 B1**
(45) Date of publication and mention of the grant of the patent: **08.08.2018**
(21) Application number: 02726257.5
(22) Date of filing: 04.06.2002
(51) Int. Cl.: G09B 5/14

(54) **ACTIVITY CONTROL SYSTEM FOR NETWORKED COMPUTER-AIDED LEARNING**
AKTIVITÄTSSTEUERSYSTEM FÜR DAS VERNETZTE COMPUTERUNTERSTÜTZTE LERNEN
SYSTEME DE COMMANDE D'ACTIVITE POUR APPRENTISSAGE ASSISTE PAR ORDINATEUR SUR RESEAU

(30) Priority: 05.06.2001 FI 20011188
(43) Date of publication of application: 06.05.2004
(73) Proprietor: SANAKO CORPORATION, 20760 Piispanristi (FI)
(72) Inventor: KÖRKKÖ, Raimo, FIN-21420 Lieto (FI); KOSKELA, Kari, FIN-21490 Marttila (FI); VASANKARI, Timo, FIN-20540 Turku (FI); REDHEAD, Paul, Leeds, Yorkshire LS19 7SH (GB)
(74) Representative: Kolster Oy Ab
(86) International application number: PCT/FI2002/000479
(87) International publication number: WO 2002/099770

(56) References cited:
- EP-A2- 1 049 066
- US-A- 6 149 441
- US-B1- 6 233 618
- DATABASE WPI Week 199814, Derwent Publications Ltd., London, GB; Class P85, AN 1998-155501, XP002972945 & JP 10 026 926 A (NTT DATA TSUSHIN KK) 27 January 1998

## Description

### Field of the Invention

The present invention relates to computer-aided teaching systems.

### Background of the Invention

Computer-aided teaching and learning has become more and more popular. In the simplest form of computer-aided learning, the student studies independently using learning software run in a personal computer (PC). In a classroom environment, a teacher typically teaches a group of students, each student having a workstation networked to the teacher's workstation. The computer-aided teaching brings new challenges to teachers. They must be able to get students to start application programs and open documents with application software. All this requires a lot of instruction, support, and monitoring to ensure that all students are operating the program correctly. The teacher may spend time running around the classroom opening and rebooting computers, running applications and trying to figure out what the students are actually doing. This takes a lot of valuable teaching time. As a teacher's computer skills vary, it is not guaranteed that all teachers can give students the required instructions on how to use computers.

Nowadays there is a large amount of learning material available as software products (e.g. CD ROM) from publishing houses and other content providers. Also on the Internet there is a huge amount of material suitable for learning sessions. The publishing houses even provide Internet web sites, called learning portals herein, which can be accessed by the students over the Internet. Such material would be valuable also during on-line lessons for student groups in networked computer classrooms but it is extremely difficult to make logical and well-structured lessons based on the learning material available on the Internet and in the software learning products, or to guide the group of students through the lesson plan without resulting in a chaos in the classroom. This is especially true when the students are required to use Internet web pages and web sites as on-line learning material during the lesson.

EP1049066 discloses a method and system for providing educational material from a teacher workstation to one or more student workstations over a communications network. Data representative of the educational material, mainly in the form of images, is transmitted from the teacher workstation to participating student workstations such that images displayed on the teacher workstation are replicated on each student workstation. The teacher work-station can restrict access to input devices, such as keyboard and mouse, to the student workstations during display of the images on the student workstations to ensure each student focuses their attention on the educational material. The students and teacher may communicate using a bi-directional data path and the teacher can take control of the inputs of a student workstation.

### Disclosure of the Invention

An object of the invention is to provide new technical tools for assisting learning activities in networked computer-aided learning.

The invention relates to a networked computer system for networked computer-aided learning, a method for remote-controlling a computer workstation in a networked computer-aided learning system, a computer program product, and a computer program as recited in the attached independent claims. Embodiments of the invention are recited in the dependent claims.

### Brief description of the Drawings

The invention is now described in more detail by means of preferred embodiment of the invention and with reference to the accompanying drawings, in which
Figure 1 illustrates an example of a network architecture of a networked computer classroom,
Figure 2 illustrates an example of a user interface of a tutor application according to the invention,
Figure 3 illustrates a navigation rule dialogue,
Figure 4 illustrates a web browser control panel,
Figure 5 illustrates a limited-mode web browser in a student work-station, and
Figure 6 illustrates the download of portfolios and lesson content from a learning portal.

### Detailed Description

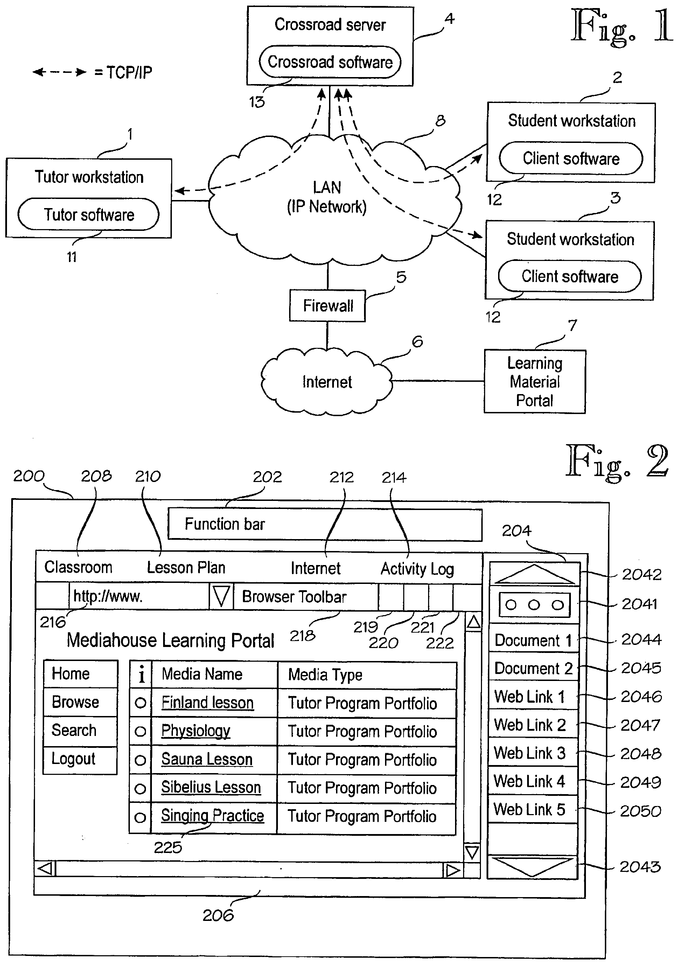

Referring to Figure 1, a networked computer-aided learning system includes a number of workstations 1, 2 and 3, and a server 4 interconnected by a data network 8, i.e. any data network suitable for interconnecting computers. Although the most typical use is in a conventional classroom environment, the workstations 1 to 3 and the server can also be located in different locations, different countries or on different continents. The system according to the invention has been tested with a configuration wherein a tutor work-station and some of the student workstations are located in Finland, while the server and some of the student stations are located in California, USA.

In the illustrated embodiment of the invention, the data network 8 is a local area network LAN, e.g. an IP network (Internet Protocol). However, all the features and functionality described below are independent of whether the data network 8 is a local, nationwide or worldwide network, such as the Internet.

The computers (the workstations 1 to 3 and the server 4) can be any standard computers which are powerful enough to run the operating system, the applications, and the tasks they are normally dedicated to. The computer may, for example, have an Intel Pentium 166 MHz or a higher processor, a 32 MB RAM, Microsoft Windows 95, 98, or NT 4.0 operating system, 10 MB hard disk, and a support for a TCP/IP network protocol.

In the preferred embodiment of the invention, the control operation according to the present invention is provided by software installed in the standard computers. The software is preferably divided into three separate software components: tutor, client and crossroad applications. The component chosen for installation depends on how the specific computer is being used.

The teacher uses a tutor component 11, which is the main interface to the system. With the tutor component 11, the teacher can control the classroom computers, their software, and the way in which they are used. The teacher's user interface (Ul) presents graphically, in a "classroom view", the workstations in the classroom according to their physical position in the classroom. The teacher can form groups of workstations and initiate a different task for different groups at any time. The tutor component 11, in cooperation with a client component 12 and a crossroad component 13, may provide a variety of features: controlling software; controlling dedicated or shared documents; locking workstations; enabling only selected applications in locked workstations; sending messages to workstations, both individual or grouped; closing down workstations; rebooting workstations; locking workstations of the operating system (windows); monitoring and accessing remote computers; broadcasting of any computer screen; web browser control.

The client software components 12 reside on the workstations 2 and 3 used by the students. After the client components 12 have been installed in the workstations 2 and 3, and the system is up and running, the client components 12 respond to the commands sent by the tutor component 11. When the client component 12 receives a command from the tutor component 11, it interprets it and executes the requested task. The client component 12 connects to the crossroad component 13 at system startup and starts listening for commands. The client component 12 runs in the background and is totally invisible to the user.

The crossroad component 13 is a server application that manages connections between student workstations 2 and 3 and the tutor workstation 1. The crossroad component 13 can be installed in the tutor computer 1 (with the tutor component 11) or in a separate server computer 4, as in the example shown in Figure 1. The crossroad component 13 is the information center of the system. The tutor component 11 and the client component 12 connect to this server program and all system control data is passed through the crossroad. The crossroad 13 routes the control data to the student workstations 1 and 2, and monitors the state of the clients 12. It also enables two-way communication between the client 12 and the tutor 11. In the preferred embodiment of the invention, the connections between the tutor 11 and clients 12 are TCP/IP connections tunnelled via the crossroad software 13. The tutor 11, client 12 and crossroad 13 components may interface to the IP network through Winsock communication layers, for example.

After the computer software has been installed on the required computers, the user can start creating the working environment. This means setting up a layout of the student workstations and specifying the software that the students are to use in their assignments. The environment forms a portfolio which can be saved as a working environment. When the basic portfolio has been set up, teachers can add their own documents to their portfolios. Portfolios can be modified when necessary, and teachers can have a different portfolio for each class. Each teacher can access his or her own system profile quickly by loading the portfolio.

Portfolios are used to store the unique working environment that has been created separately by or for each teacher, and furthermore, for each lesson. Therefore, a portfolio can also be considered as an electronic lesson plan. Each portfolio may contain a layout of the student workstations, a set of program operations that are needed for assignments, and a set of documents the teacher adds to the document bar. A user can modify his or her portfolio(s) to meet his or her changing needs. When the basic portfolio has been set up, the user can change the workstation layout, the application suite, and the documents. The user can save his portfolio(s) into files for later use. Furthermore, the user can export a portfolio, and then open it for students.

The applications, documents and the lesson plan in a portfolio can be made available for students. Export saves the applications and documents in a folder as links to the corresponding files. The application shortcuts refer to files on a local computer, and document shortcuts to files on a shared resource.

Student workstations 2 and 3 are controlled with the tutor application. The teacher can open and close applications and documents on student workstations 2 and 3, lock and relieve them, log them off from the network and even force them to shut down. The teacher can group the workstations within the network or portfolio into small units to which the teacher can then assign different tasks.

Figure 2 illustrates an example of a user interface of a tutor application 11 when an "Internet view" is activated. The user interface of the tutor computer 1 has a main window 200 which behaves like any other window designed for Windows XX (95, 98, NT) environment. It may, for example, include one or more of the following components shown in Figure 2.

**Group bar** 206 is the horizontal bar at the bottom of the window. This bar is used for creating groups of student workstations.

**Classroom view** 208 (when activated) displays a layout of student workstations. The appearance of the layout depends on the portfolio.

**Activity log view** 214 (when activated) displays a log file that contains information on all the workstations in the current classroom view layout. Workstations can be controlled either as individuals or groups.

**Lesson plan view** 210 (when activated) displays the lesson plan included in the current portfolio. The lesson plan feature facilitates creating a detailed plan on a particular lesson. The lesson plan can be saved along with a portfolio. The documents, applications and the lesson plan included in one portfolio provide the teacher with a complete lesson which he or she can then use on different classes. The lesson plan view may consist of three fields: objectives, activities and outcome. The objectives are the aim of a lesson, the results which should be achieved on a particular lesson. Activities are the assignments to be completed on a lesson. Outcome is the expected end result of a lesson. The lesson plan helps the teacher to construct a lesson and to utilize the learning materials (documents and applications) she or he has saved in a portfolio. If students are to study independently, the lesson plan functions as a guide to proceed with the lesson and to complete the tasks assigned.

**Internet view** 212 (when activated) provides the teacher with easy access to the Internet and its learning resources. The Internet view will be discussed in more detail below.

**Function bar** 202 is located horizontally on top of the main window 200. It contains the title of the program, the command sets that can be used to modify the functionality, and the control patterns for managing the window size. The function bar 202 includes various command operations the teacher can perform on the student workstations in all views. Some examples of the command operations are given below. By activating a **program operations command** in the function bar 202, the teacher can start and close applications in the student workstations 2 and 3. The program to be started also needs to be installed in the student workstations. By means of a **Locking operations** command the student workstations 2 and 3 can be locked for various purposes. Sometimes computers distract students from what the teacher has to say, and a teacher may find it convenient to lock the workstations completely for a while. It is also possible to partially lock the workstations 2 and 3, so that the students can only use the applications the teacher wants them to use. This may be done by locking the workstations 2 and 3 first and then starting only the applications the teacher wants. The student can use only these applications, and the workstations 2 and 3 remain locked otherwise. The **Messaging operations** are useful when the teacher wants to display messages on the student workstations 2 and 3. The teacher can send messages that the students need to confirm, or messages that stay on students' screens until the teacher hides them. The teacher can also send messages that are displayed for a limited period of time. By means of the **Documents operations,** the teacher can have the student workstations 2 and 3 open documents the teacher has added to the document bar 204 in the tutor application 11. The documents to be opened in the student workstations 2 and 3 can reside in a network resource where each workstation has at least read access, or a shared database on the tutor/crossroad computer.

**Document bar** 204 is the vertical bar on the right-hand side of the window. This is where to place the documents a teacher wants to use in teaching. The document bar 204 consists of a button 2041 for adding new documents to the document bar, arrow buttons 2042 and 2043 for scrolling the document bar contents if all documents cannot be displayed at one time, and slots 2044-2050 for documents (i.e. links to document files). The teacher can instruct the student workstations 2 and 3 to open existing documents (by means of the document operations command in the function bar 202) once they have been added to the document bar 204 of the user interface in the tutor workstation 1. The document bar 204 can also contain web sites (i.e. links to web pages). The teacher can add the sites to the document bar 204 by dragging the links directly from the Internet view, for example from the address field 216. The student can instruct the student workstations 2 and 3 to open any link in the document bar 204 by means of a command in the function bar 202. The tutor application 11 sends a respective command to the student workstations which launch the selected web page (and start the web browser, if needed). Thus, the teacher can add the folder to the document bar and open it for the student workstations 2 and 3. This way, the teacher can provide the students with all the necessary tools and material for a specific lesson. Like any document to be opened in the student workstations 2 and 3, the folder must be located in a network resource where each workstation has at least read access.

In Figure 2, an Internet view 212 is activated. Consequently, an embedded browser is displayed within the main window 200 in the tutor user interface. The embedded web browser in the Internet view is a full browser which functions as any other standard browser. The embedded browser may be a standard browser run in the tutor main window and configured for this use through an API (Application Programming Interface) by the tutor program. The browser toolbar 218 includes at least the basic browser buttons, such as the **Go to page** button which opens the web page in address box 216, the **Previous** button, the **Next** button, the **Stop** button, the **Refresh** button, the **Print** button and the **Home** button. According to the invention, the browser toolbar 218 also includes some additional buttons for teaching and student controlling purposes. Firstly, there is a button 219 for adding the current web page to the document bar. Secondly, there is a "Deny address" button 220 which adds the current address to the denied web addresses. Thirdly, there is an "Allow address" button 221 which adds the current address to the allowed web addresses. Finally, a "Web browser control" button 222 opens the web browser control panel.

By means of these extra buttons, the teacher can very easily add useful web links to a portfolio.

The teacher can also allow or deny access to any web page and thus define limits to the students' usage of the Internet. The aim is to limit the web access in the browser side by limiting the students' Internet browsing capabilities, which allows more flexibility for various learning situations in the classroom environment. The browsing scope will be narrowed at different levels, from no limitations to site-level limitations and finally to single page-level limitation.

There are at least two alternatives for navigation policy, i.e. for allowing and denying access to web pages. These alternatives are 1) strict navigation policy, and 2) open navigation policy.

The browsing rules may be based on the text found in the address of a web page. Consequently, the rules apply to all pages that contain the specified text in their addresses.

The basic idea in the strict navigation policy is that all the web addresses are denied. If needed, certain addresses can be allowed either by defining a rule file or specifying a special rule that applies only during the current session. Heuristics for limiting the web page access may be based on a simple method of text comparison in URLs. For example, in the strict (pessimistic) approach, the user may be allowed to browse to pages containing "www.teleste.fi" in their addresses. Practically, this requirement limits the browsing to one "site" only. The same logic can be applied to single pages or to a subset of site pages.

The main idea in the open navigation policy is that all the web addresses are allowed ones. If necessary, certain addresses can be denied either by defining a rule file or specifying a special rule that applies only during the current session. An example of the open (optimistic) approach would be allowing all sites but the ones that contain "playboy" or "sex" in their addresses.

Let us assume that the teacher wants to define a rule concerning game web sites. The teacher can open web pages that have the text "game" included in their addresses, for example http://www.gamepower.com/

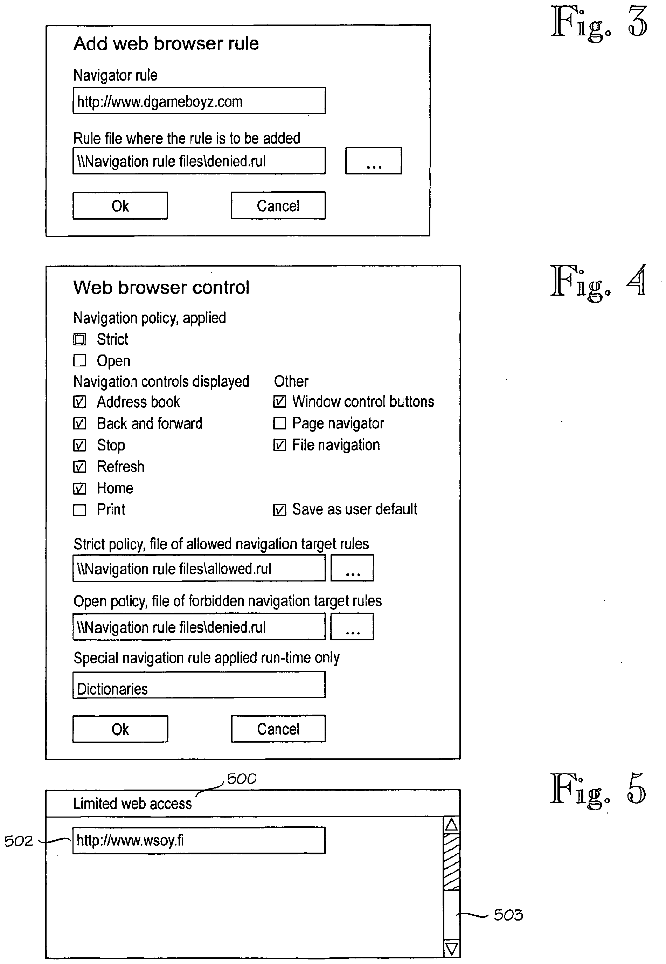

Then, the teacher clicks the deny access button 220 or the allow access button 221 to open the add web browser rule dialogue shown in Figure 3. The teacher can see the above address in the field labelled "navigation rule". Now, however, the rule applies to this specific address only. The user still needs to edit the rule as follows: Game. The user does not necessarily need to browse a relevant web page. In the add web browser rule dialogue, the user can simply edit the address to meet his/her needs. In order to save the rule, the user must specify a navigation rule file, for example with a name *.rul. It then depends on the navigation policy how this rule is applied. If the strict navigation policy is selected, only the web addresses containing the text "game" can be opened. And, vice versa, if open navigation policy is selected, all other addresses but those containing the text "game" can be accessed.

The system according to the invention makes it easier for a teacher to control students' access to web pages and to allow viewing only the pages the teacher wants. The tutor application 11 in the tutor workstation 1 has a web browser control panel with which the teacher can define the navigation policy and control for the web browser.

In order to define web browser settings for the student workstations, the teacher clicks the Web browser control button 222 to open the web browser control panel shown in Figure 4. In this navigation control panel, the user can select whether a strict or open navigation policy is applied. The teacher can also select which navigation control buttons of the browser in the student computer is displayed or hidden on the screen. The user must also specify the files of navigation target rule for the strict and open navigation policy. Further, a special navigation rule may be specified. With a Page navigation check box, the teacher can control whether or not a student is able to browse the Internet. Checking the box allows browsing. With the File navigation check box, the teacher can control whether or not the student can open local HTML files. Checking the box will allow opening. Checking the Save as user default box saves the current web browser settings as default settings. Next time the browser is opened, the default settings are used. The changes are immediately applied after clicking OK.

The web browser settings are sent to the student workstations which are configured according to the settings and the navigation target rule files. The rule files are stored on the server 4 or in a shared folder in the tutor workstation 1 where the student workstations have at least read access.

The web browser of the student workstation is configured according to the web browser settings and commands sent from the tutor application 11. The www-browser application must have the basic web browser "look and feel"; it must work like any other Internet browsing utility as it can be used as replacement of any common www-browser application. The web browser in the student workstation may be a standard web browser (e.g. Microsoft Internet Explorer or Netscape Navigator) which is configured and controlled by the client application 12 through an API interface or another suitable interface. In the preferred embodiment of the invention, the browser application relies on Internet Explorer (IE) technology; it embeds IE as active-x web browser control. The IE control allows trapping of navigation events before the navigation itself occurs and the page is displayed. This gives us a chance to check the correctness of the targeted address and cancel the navigation if needed.

When the browser is opened, the client application checks the web browser settings set by the tutor application and configures the browser accordingly through the interface. When the client application receives commands or changed settings from the tutor application while the web browser is open, it controls the web browser or changes the configuration of the web browser through the interface according to the received information. The configuration normally limits the browsing capability available to the student. A browser in its most limited mode is illustrated in Fig 5. The browser window contains only a title bar 500, an address box 502 and a scrolling bar 503. No means for navigation are available to the student. The student can only launch the web page allowed by the tutor. Also in this mode, the tutor can instruct the student workstation to open a new web page which is in the document bar 204, as described above. With other web browser settings, some or all of the buttons in the standard browser toolbar, and a full navigation capability or a less limited navigation capability may available to the student. The limited mode web browser could provide e.g. the following options to the tutor: 1) to launch a web page for the student, e.g. www.wsoy.fi, and limit the student to browsing any pages within that domain; to launch a web page to the student, e.g. www.wsoy.fi/opit/english/football, and keep the student on that page only; 3) to launch a web page for the student, and then only allow links to other preset pages and/or domains.

The ability to lock the student screens in order to focus the attention of the student on the tutor is a powerful feature in itself, but when combined with the subsequent opening of a limited mode web browser, it allows the tutor to further control the use of the browsers within the classroom. This is achieved by first sending a locking command and then a browser opening command to the student workstations from the tutor workstation 1, using the command operations in the function bar 204 (Figure 2). The combination of the lock and the limited web browser provides the tutor with many options to determine how to use the online content in a classroom teaching environment in the best possible manner

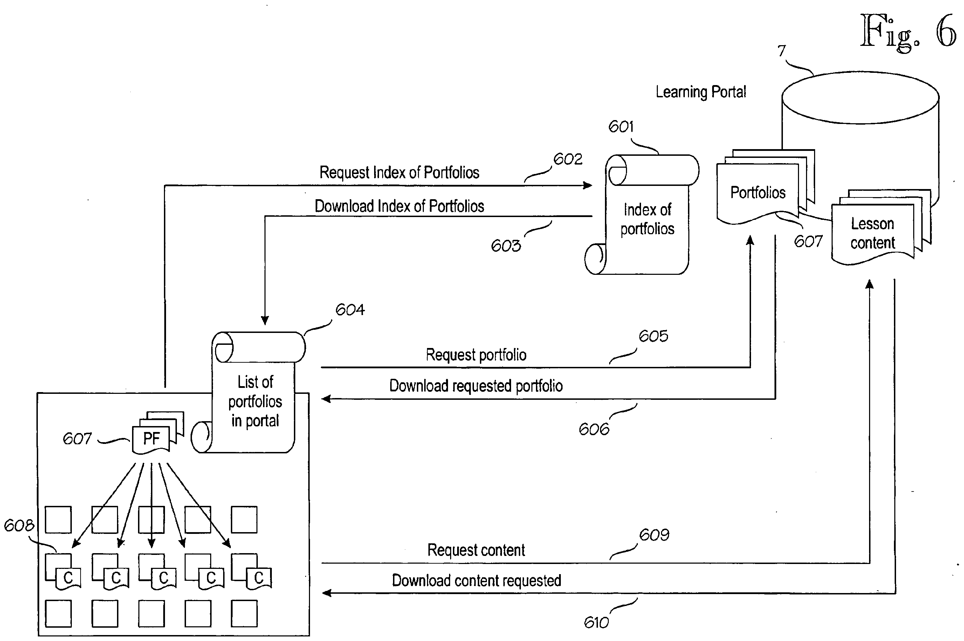

The publishing houses and other content providers have learning portals on the Internet. A learning portal is a web site in a web server which provides access to a variety of learning material which is in form of a plurality of web pages. In an embodiment of the invention, a tutor program portfolio file is created and saved as a hyperlink on the web page at the learning portal. The portfolio file is similar to portfolios used locally in the tutor applications. However, the portfolio file in the learning portal allow publishing houses to create lessons based on the learning material and distribute the created lessons through learning portals. The portfolio typically contains web links to the web sites or pages needed during a lesson. The portal provider can add such a hyperlink to any topic area, lesson plan, subject, etc. Typically, the learning portal may include an index of portfolios, as designated by the reference 601 in Figure 6. The teacher can access the learning portal with the embedded browser and request (602) and download (603) the index of portfolios in form of a list of portfolios 604 to the tutor computer. The teacher can initiate an automatic download (605,606) of a portfolio 607 from the portal 7 to the user interface of the tutor application by clicking the respective hyperlink. The downloaded portfolio 607 configures the user interface of the tutor program, which means that at least the web links 608 (URLs) from the portfolio are automatically added to the document bar 204. Then, the teacher can request and download (609,610) the desired content from the portal 7 by clicking the respective web link 608. The teacher can also deliver the web links and thereby the contents to the student computers as a part of lesson. In Figure 2, a learning portal web page is displayed on the screen of the embedded web browser. The web page contains hyperlinks 225 to tutor program portfolios which are downloadable from the learning portal, such as the learning portal 7 in Figure 1. When the teacher clicks the hyperlink Finland Lesson, the respective portfolio is downloaded and the content is added to the user interface, i.e. at least the web links are added to the document bar 204. It is also possible that the portal web page is accessed by a default web browser (such as Internet Explorer or Netscape) instead of the embedded web browser, and when the hyperlink is clicked, it automatically launches the tutor application and adds the portfolio content.

After the portfolio content has been added to the user interface, the lesson can be continued as with any locally created portfolio.

As explained above, the invention allows the tutor to vary the degree of control to meet the needs of the lesson. For some lessons, it may be necessary to apply the highest level of control whereas some lessons may not require such a tight direction. In an embodiment of the invention, the tutor has an option to send all the shortcuts from the tutor portfolio to the students and allow them to select which web links to use and in which order. This way of delivering the resources also allows the tutor to assess how a student handles the task. A further optional development to this feature is to also export the learning objectives, activities and outcomes to the students in form of a text file. This could help in giving the students the information regarding the reason why they need to do the task, what it is that is required and what they should learn during the process.

In the above examples, when a tutor clicks a hyperlink within the portal, all the web links are automatically added to the user interface of the tutor application. In a further embodiment of the invention, these pages are automatically cached to a proxy server (e.g. server 4) or to a shared part of a hard disk in the tutor workstation 1, if no server exists. The advantage of this is that any subsequent launch of these pages by or to the students will result in these pages being accessed from the cached copy and not via the Internet. The speed of access is higher and the access is reliable. Once the tutor closes the portfolio or shuts down, the system may remove the cached pages. The possibility that slow Internet connections affect the lesson is removed.

These solutions require that the portal provider create these portfolio files and add them as hyperlinks to their portal content. Therefore, the portal provider may have tutor application software installed at one or more workstations in their office. The web links are then added manually (as for local use) and the resulting portfolio is saved as a portfolio file for uploading to the portal in the appropriate location.

When a school makes a subscription to such a learning portal, it receives a paper manual for the tutors. This teaches the tutor how to get the best from the learning portal and provides them with practical guidelines. However, in a further embodiment of the invention, some kind of a lesson plan template is provided which allows the learning objectives, teaching activities and learning outcomes to be added to the portfolio when the portal hyperlink is being created. This information can be used either in addition to or instead of using the paper manual.

Even if the portal provider had created many portfolio links for the tutors, there will always be tutors who want to create a portfolio of their own. In an embodiment of the invention, the tutor can develop his own web portfolio while the portal is accessed by the embedded browser within the tutor application. This would allow the user to take generic portfolios and easily add further links to other related web sites that reinforce the learning objectives of the portal.

The integration of portfolio links into the learning portal provides tutors with several benefits. It provides a sophisticated mechanism by means of which a tutor can deliver the learning resources of the portal in a classroom environment. The tutor has quick and easy access to the portal content, and he or she does not have to browse the portal before every lesson as he or she can simply load his or her saved portfolios. The tutors can modify the generic portal content to reflect the way they want to teach and then share this with other tutors. It also provides a way of teaching students of different skills and levels. It enables different links to be sent from the tutor application to different students according to the students' abilities.

## Claims

1. A networked computer system for networked computer-aided learning, the networked computer system comprising a tutor workstation (1) with a tutor application (11), at least one student workstation (2, 3) with a web browser, and a network (8) interconnecting the tutor workstation (1) and the at least one student workstation (2, 3), **characterized in that**
the tutor workstation (1) comprises a user interface for remote-controlling the operation of the at least one student workstation (2, 3) by sending control commands over the network (8),
the tutor workstation (1) is arranged to remote-control the browsing functionality of the web browser of the at least one student workstation(2, 3) by said control commands sent over the network to the at least one student station (2, 3),
wherein said tutor workstation (1) is arranged to send to the at least one student workstation (2, 3) a navigation policy definition including a set of rules which limits the capacity in which a browsing capability of a web browser in the at least student workstation (2, 3) is available, and
wherein the at least one student workstation (2, 3) is arranged to receive the navigation policy definition and to configure the browser in the at least one student workstation (2, 3) according to the navigation policy definition such that part of the browsing capability of the web browser is disabled and made unavailable.

2. A system as claimed in claim 1, **characterized in that** the tutor workstation (1) is able to lock the at least one student workstation (2, 3) to run the web browser.

3. A system as claimed in claim 1 or 2, **characterized in that** the tutor workstation (1) is able to control the browsing functionality of the browser by limiting the browsing to a domain set by the tutor.

4. A system as claimed in anyone of the preceding claims, **characterized in that** the tutor workstation (1) is arranged to enable a tutor to create or load a pre-created portfolio (607) which defines a working environment for a lesson, the working environment definitions including one or more of the following: a layout of the student computer workstations, the software students are to use in their assignments, a set of documents, a set of web pages as documents, web links.

5. A system as claimed in claim 4, **characterized in that** the portfolio (607) is loaded from a web server (7), and the user interface of the tutor workstation (1) is configured according to the content of the portfolio.

6. A system as claimed in claim 5, **characterized in that** the web links (608) in the loaded portfolio (607) are added to the user interface.

7. A system as claimed in anyone of the preceding claims, **characterized in that** the tutor workstation is arranged to enable a tutor to command the at least one student workstation (2, 3) to launch a web page relating to any web link displayed on the user interface of the tutor workstation.

8. A method for remote-controlling a computer workstation in a networked computer-aided learning system, the networked learning system comprising a tutor workstation (1), at least one student workstation (2, 3), and a network (8) interconnecting the tutor workstation (1) and the at least one student workstation (2, 3) having a browser and an Internet access, **characterized by**
displaying at the tutor workstation (1) a user interface having control functions by which a tutor is able to remote-control the operation the at least one student workstation over the network,
remote-controlling by the tutor workstation (1), a browsing capability of a web browser in the at least one student station (2, 3) by sending over the network (8) to the at least one student station (2, 3) commands according to the control functions selected by the tutor,
sending from the tutor workstation (1) to the at least one student work-station (2, 3) a navigation policy definition including a set of rules which limits the capacity in which a browsing capability of a web browser in the at least student workstation (2, 3) is available to the student, and
the at least one student workstation (2, 3) configuring the browser according to the navigation policy definition such that part of the browsing capability of the web browser is disabled and made unavailable to the student.

9. A method according to claim 8, **characterized by**
sending a command to automatically open a web browser from the tutor workstation (1) to the at least one student workstation (2, 3).

10. A method according to claim 8 or 9, **characterized by**
storing the navigation policy definition in a memory accessible by the at least one student computer (2, 3),
loading the navigation policy definition from the memory to the at least one the web browser,
configuring the browser in the at least one student workstation (2, 3) according to the loaded navigation policy definition

11. A method according to any one of claims 8 to 10, **characterized by**
limiting the browsing of the browser in the student computer work-station (2, 3) to a domain or to a web page set in the navigation policy definition.

12. A method according to any one of claims 8 to 11, **characterized by**
sending, from the tutor computer (1) to the web browser in the at least one student workstation (2, 3), a command to automatically launch a web page selected by the tutor at the user interface.

13. A computer program product comprising program code means stored on a computer readable medium for performing the method of any one of claims 8 to 12 when the program is run on a computer.

14. A computer program comprising code means for performing each step of any one of claims 8 to 12 when the program is run on a computer.

## Patentansprüche

1. Vernetztes Computersystem für ein vernetztes, computergestütztes Lernen, wobei das vernetzte Computersystem eine Tutor-Workstation (1) mit einer Tutor-Anwendung (11), wenigstens eine Schüler-Workstation (2, 3) mit einem Webbrowser und ein Netzwerk (8), das die Tutor-Workstation (1) und die wenigstens eine Schüler-Workstation (2, 3) miteinander verbindet, umfasst, **dadurch gekennzeichnet, dass**:
die Tutor-Workstation (1) eine Benutzeroberfläche für das Fernbedienen des Betriebs der wenigstens einen Schüler-Workstation (2, 3) durch das Senden von Steuerbefehlen über das Netzwerk (8) umfasst,
die Tutor-Workstation (1) angeordnet ist für das Fernbedienen der Browsingfunktionalität des Webbrowsers der wenigstens einen Schüler-Workstation (2, 3) durch die über das Netzwerk an die wenigstens eine Schüler-Workstation (2, 3) gesendeten Befehle,
wobei die Tutor-Workstation (1) angeordnet ist für das Senden an die wenigstens eine Schüler-Workstation (2, 3) einer Navigationsrichtliniendefinition einschließlich eines Satzes von Regeln, der die Kapazität der verfügbaren Browsingfähigkeit eines Webbrowsers in der wenigstens einen Schüler-Workstation (2, 3) begrenzt, und
wobei die wenigstens eine Schüler-Workstation (2, 3) angeordnet ist für das Empfangen der Navigationsrichtliniendefinition und für das Konfigurieren des Browsers in der wenigstens einen Schüler-Workstation (2, 3) gemäß der Navigationsrichtliniendefinition derart, dass ein Teil der Browsingfähigkeit des Webbrowsers deaktiviert und nicht-verfügbar gemacht wird.

2. System nach Anspruch 1, **dadurch gekennzeichnet, dass** die Tutor-Workstation (1) das Ausführen des Webbrowsers durch die wenigstens eine Schüler-Workstation (2, 3) unterbinden kann.

3. System nach Anspruch 1 oder 2, **dadurch gekennzeichnet, dass** die Tutor-Workstation (1) die Browsingfunktionalität des Browsers steuern kann, indem sie das Browsing auf eine durch den Tutor gesetzte Domäne begrenzt.

4. System nach einem der vorstehenden Ansprüche, **dadurch gekennzeichnet, dass** die Tutor-Workstation (1) angeordnet ist, um einem Tutor zu ermöglichen, ein Portfolio (607) zu erstellen oder ein zuvor erstelltes Portfolio (607) zu laden, das eine Arbeitsumgebung für eine Lektion definiert, wobei die Arbeitsumgebungsdefinitionen eines oder mehrere der Folgenden umfassen: ein Layout der Schüler-Workstations, die durch die Schüler für die Aufgaben zu verwendende Software, einen Satz von Dokumenten, einen Satz von Webseiten als Dokumente, Weblinks.

5. System nach Anspruch 4, **dadurch gekennzeichnet, dass** das Portfolio (607) von einem Webserver (7) geladen wird und die Benutzeroberfläche der Tutor-Workstation (1) gemäß dem Inhalt des Portfolio konfiguriert wird.

6. System nach Anspruch 5, **dadurch gekennzeichnet, dass** die Weblinks (608) in dem geladenen Portfolio (607) zu der Benutzeroberfläche hinzugefügt werden.

7. System nach einem der vorstehenden Ansprüche, **dadurch gekennzeichnet, dass** die Tutor-Workstation angeordnet ist, um einem Tutor zu ermöglichen, die wenigstens eine Schüler-Workstation (2, 3) für das Starten einer Webseite gemäß einem an der Benutzeroberfläche der Tutor-Workstation angezeigten Weblink anzuweisen.

8. Verfahren für das Fernbedienen einer Workstation in einem vernetzten computergestützten Lernsystem, wobei das vernetzte Lernsystem eine Tutor-Workstation (1), wenigstens eine Schüler-Workstation (2, 3) und ein Netzwerk (8), das die Tutor-Workstation (1) mit der wenigstens einen Schüler-Workstation (2, 3) einschließlich eines Browsers und eines Internetzugangs verbindet, umfasst, **gekennzeichnet durch**:
Anzeigen, an der Tutor-Workstation (1), einer Benutzeroberfläche mit Steuerfunktionen, die einem Tutor ermöglichen, den Betrieb an der wenigstens einen Schüler-Workstation über das Netzwerk fernzubedienen,
Fernbedienen, durch die Tutor-Workstation (1), einer Browserfähigkeit eines Webbrowsers in der wenigstens einen Schüler-Workstation (2, 3) durch das Senden, über das Netzwerk (8) an die wenigstens eine Schüler-Workstation (2, 3), von Befehlen in Entsprechung zu den durch den Tutor ausgewählten Steuerfunktionen,
Senden, von der Tutor-Workstation (1), an die wenigstens eine Schüler-Workstation (2, 3) einer Navigationsrichtliniendefinition einschließlich eines Satzes von Regeln, der die Kapazität der verfügbaren Browsingfähigkeit eines Webbrowsers in der wenigstens einen Schüler-Workstation (2, 3) für den Schüler begrenzt, und
Konfigurieren, durch die wenigstens eine Schülter-Workstation (2, 3) des Browsers gemäß der Navigationsrichtliniendefinition derart, dass ein Teil der Browsingfähigkeit des Webbrowsers deaktiviert und nicht-verfügbar für den Schüler gemacht wird.

9. Verfahren nach Anspruch 8, **gekennzeichnet durch**:
Senden eines Befehls zum automatischen Öffnen eines Webbrowsers von der Tutor-Workstation (1) an die wenigstens eine Schüler-Workstation (2, 3).

10. Verfahren nach Anspruch 8 oder 9, **gekennzeichnet durch**:
Speichern der Navigationsrichtliniendefinition in einem Speicher, auf den durch die wenigstens eine Schüler-Workstation (2, 3) zugegriffen werden kann,
Laden der Navigationsrichtliniendefinition von dem Speicher zu dem wenigstens einen Webbrowser,
Konfigurieren des Browsers in der wenigstens einen Schüler-Workstation (2, 3) gemäß der geladenen Navigationsrichtliniendefinition.

11. Verfahren nach einem der Ansprüche 8 bis 10, **gekennzeichnet durch**:
Begrenzen des Browsings des Browsers in der Schüler-Workstation (2, 3) auf eine Domäne oder einen Satz von Webseiten in der Navigationsrichtliniendefinition.

12. Verfahren nach einem der Ansprüche 8 bis 11, **gekennzeichnet durch**:
Senden, von dem Tutor-Computer (1) an den Webbrowser in der wenigstens einen Schüler-Workstation (2, 3), eines Befehls zum automatischen Starten einer durch den Tutor an der Benutzeroberfläche ausgewählten Webseite.

13. Computerprogrammprodukt, das einen auf einem computerlesbaren Medium gespeicherten Programmcode umfasst, der bei einer Ausführung auf einem Computer das Verfahren gemäß einem der Ansprüche 8 bis 12 durchführt.

14. Computerprogramm, das einen Code umfasst, der bei einer Ausführung auf einem Computer die Schritte der Ansprüche 8 bis 12 durchführt.

## Revendications

1. Système d'ordinateurs en réseau pour l'apprentissage assisté par ordinateur en réseau, le système d'ordinateurs en réseau comprenant une station de travail de tuteur (1) avec une application tuteur (11), au moins une station de travail d'élève (2, 3) équipée d'un logiciel de navigation sur la toile, et un réseau (8) interconnectant la station de travail de tuteur (1) et l'au moins une station de travail d'élève (2, 3), **caractérisé en ce que**
la station de travail de tuteur (1) comprend une interface utilisateur pour commander à distance le fonctionnement de l'au moins une station de travail d'élève (2, 3) en envoyant des instructions de commande par le réseau (8),
la station de travail de tuteur (1) est conçue pour commander à distance les fonctionnalités de navigation du logiciel de navigation sur la toile de l'au moins une station de travail d'élève (2, 3) grâce aux dites instructions de commande envoyées, par le réseau, à l'au moins une station élève (2, 3),
dans lequel ladite station de travail de tuteur (1) est conçue pour envoyer à l'au moins une station de travail d'élève (2, 3) une définition de principes de navigation incluant un ensemble de règles qui limitent les possibilités d'accéder aux capacités de navigation d'un logiciel de navigation sur la toile dans l'au moins une station de travail d'élève (2, 3), et
dans lequel l'au moins une station de travail d'élève (2, 3) est conçue pour recevoir la définition de principes de navigation et pour configurer le logiciel de navigation dans l'au moins une station de travail d'élève (2, 3) conformément à la définition de principes de navigation, de façon qu'une partie des capacités de navigation du logiciel de navigation sur la toile soit désactivée et rendue inaccessible.

2. Système selon la revendication 1, **caractérisé en ce que** la station de travail de tuteur (1) a la possibilité de bloquer le lancement du logiciel de navigation sur la toile par l'au moins une station de travail d'élève (2, 3).

3. Système selon la revendication 1 ou 2, **caractérisé en ce que** la station de travail de tuteur (1) a la possibilité de commander les fonctionnalités de navigation du logiciel de navigation en limitant la navigation à un domaine fixé par le tuteur.

4. Système selon l'une quelconque des revendications précédentes, **caractérisé en ce que** la station de travail de tuteur (1) est conçue pour permettre à un tuteur de créer ou de charger un dossier préalablement créé (607) qui définit un environnement de travail pour une leçon, les définitions de l'environnement de travail incluant une ou plusieurs des définitions suivantes : une configuration des stations de travail des ordinateurs des élèves, le logiciel destiné à être utilisé par les élèves pour leurs devoirs, un ensemble de documents, un ensemble de pages sur la toile en tant que documents, des liens sur la toile.

5. Système selon la revendication 4, **caractérisé en ce que** le dossier (607) est chargé depuis un serveur sur la toile (7) et l'interface utilisateur de la station de travail de tuteur (1) est configurée en fonction du contenu du dossier.

6. Système selon la revendication 5, **caractérisé en ce que** les liens sur la toile (608) contenus dans le dossier (607) chargé sont ajoutés à l'interface utilisateur.

7. Système selon l'une quelconque des revendications précédentes, **caractérisé en ce que** la station de travail de tuteur est conçue pour permettre à un tuteur de commander à l'au moins une station de travail d'élève (2, 3) de lancer une page sur la toile en rapport avec n'importe quel lien sur la toile affiché sur l'interface utilisateur de la station de travail de tuteur.

8. Procédé de commande à distance d'une station de travail d'ordinateur dans un système d'apprentissage assisté par ordinateur en réseau, le système d'apprentissage en réseau comprenant une station de travail de tuteur (1), au moins une station de travail d'élève (2, 3) et un réseau (8) interconnectant la station de travail de tuteur (1) et l'au moins une station de travail d'élève (2, 3) équipée d'un logiciel de navigation et d'un accès à l'internet, **caractérisé par**
l'affichage, au niveau de la station de travail de tuteur (1), d'une interface utilisateur disposant de fonctions de commande permettant à un tuteur de commander à distance le fonctionnement de l'au moins une station de travail d'élève par le réseau,
la commande à distance, par la station de travail de tuteur (1), de capacités de navigation d'un logiciel de navigation sur la toile dans l'au moins une station d'élève (2, 3) en envoyant à l'au moins une station d'élève (2, 3), par le réseau (8), des instructions conformément aux fonctions de commande sélectionnées par le tuteur,
l'envoi, de la station de travail de tuteur (1) à l'au moins une station de travail d'élève (2, 3), d'une définition de principes de navigation incluant un ensemble de règles qui limitent les possibilités d'accéder aux capacités de navigation d'un logiciel de navigation sur la toile dans l'au moins une station de travail d'élève (2, 3), et
la configuration par l'au moins une station de travail d'élève (2, 3) du logiciel de navigation conformément à la définition de principes de navigation, de façon qu'une partie des capacités de navigation du logiciel de navigation sur la toile soit désactivée et rendue inaccessible à l'élève.

9. Procédé selon la revendication 8, **caractérisé par**
l'envoi d'une instruction pour ouvrir automatiquement un logiciel de navigation sur la toile de la station de travail de tuteur (1) à l'au moins une station de travail d'élève (2, 3).

10. Procédé selon la revendication 8 ou 9, **caractérisé par**
le stockage de la définition de principes de navigation dans une mémoire accessible à l'au moins un ordinateur d'élève (2, 3),
le chargement de la définition de principes de navigation de la mémoire vers l'au moins logiciel de navigation sur la toile,
la configuration du logiciel de navigation dans l'au moins une station de travail d'élève (2, 3) conformément à la définition de principes de navigation chargée.

11. Procédé selon l'une quelconque des revendications 8 à 10, **caractérisé par**
la limitation de la navigation du logiciel de navigation dans la station de travail de l'ordinateur de l'élève (2, 3) à un domaine ou à une page sur la toile fixé(e) dans la définition de principes de navigation.

12. Procédé selon l'une quelconque des revendications 8 à 11, **caractérisé par**
l'envoi, de l'ordinateur du tuteur (1) vers le logiciel de navigation sur la toile dans l'au moins une station de travail d'élève (2, 3), d'une instruction pour lancer automatiquement une page sur la toile sélectionnée par le tuteur au niveau de l'interface utilisateur.

13. Produit programme d'ordinateur comprenant un moyen de code de programme stocké sur un support lisible par ordinateur pour exécuter le procédé selon l'une quelconque des revendications 8 à 12 lorsque le programme est lancé sur un ordinateur.

14. Programme d'ordinateur comprenant un moyen de code pour exécuter chaque étape de l'une quelconque des revendications 8 à 12 lorsque le programme est lancé sur un ordinateur.
